# EUROPEAN PATENT SPECIFICATION

(11) **EP 1 266 303 B1**
(45) Date of publication and mention of the grant of the patent: **22.10.2014**
(21) Application number: 01918458.9
(22) Date of filing: 07.03.2001
(51) Int. Cl.: G10L 13/04, G10L 15/26

(54) **METHOD AND APPARATUS FOR DISTRIBUTING MULTI-LINGUAL SPEECH OVER A DIGITAL NETWORK**
VERFAHREN UND VORRICHTUNG ZUM VERTEILEN MEHR-SPRACHIGER SPRACHE ÜBER EIN DIGITALES NETZWERK
PROCEDE ET DISPOSITIF DE DISTRIBUTION D'UN DISCOURS MULTILINGUE SUR UN RESEAU NUMERIQUE

(30) Priority: 07.03.2000 US 520021
(43) Date of publication of application: 18.12.2002
(73) Proprietor: Oipenn, Inc., New York, NY 10020 (US)
(72) Inventor: MEISEL, William, S., Tarzana, CA 91356 (US); WHITAKER, Ridley, M., Katonah, NY 10536 (US)
(74) Representative: Dantz, Jan Henning
(86) International application number: PCT/US2001/007466
(87) International publication number: WO 2001/067293

(56) References cited:
- EP-A- 0 262 938
- FR-A- 2 713 800
- US-A- 4 882 681
- US-A- 5 581 600
- US-A- 5 615 296
- US-A- 5 632 002
- US-A- 5 668 854
- US-A- 5 696 879
- US-A- 5 765 179
- US-A- 5 815 196
- US-A- 5 878 117
- US-A- 5 900 908
- US-A- 5 960 399
- CHIEN L.F.: 'Internet Chinese information retrieval using unconstrained mandarin speech queries based on a cleint-server architecture and A PAT-tree based language model' ICASSP 97 vol. 2, pages 1155 - 1158, XP002940238

## Description

### Technical Field

The present invention relates to methods and apparatus for distributing speech, and more particularly, to methods and apparatus for distributing original speech in one or more languages over a digital network from an originating location to a distribution location potentially remote from the originating location.

### Background of the Invention

A number of applications distribute speech over a network (e.g., the Internet) in the form of a one-way broadcast. Some of the applications are internal company functions, such as an address by a corporate executive of a multi-national company to all employees. Others are news, sports, or other broadcasts typically associated with radio or television broadcasts. Others may be customized broadcasts of information related to the individual (such as news on stocks in the individual's portfolio or scores for a local sports team). The number of such sources of audio information is compounding due to the increasing capacity of the Internet and wireless sources, such as satellite-broadcast radio. With the decreasing cost of distributing audio and video, the number of such sources is increasing, and audiences are becoming international. For example, a soccer fan in Brazil may be interested in listening to a broadcast of a game between the US and Germany, which is broadcast only over the Internet. The fan may also wish to hear the broadcast in Brazilian Portuguese, rather than in the language originally broadcast.

These trends create certain problems:
- When audio is broadcast from one location to potentially hundreds of thousands of listeners through an international network, the transmitting servers and the network link from them can become over-burdened, creating breaks in the audio or denial of service in the extreme case.
- The cost of supporting a high-data-rate audio service and high-data-rate connections to a network backbone can make audio broadcasting to a large number of listeners economically infeasible on a per-listener basis, yet a large number of listeners is usually a requirement for economic feasibility of the application.
- It is expensive, and in many cases, impractical, to repeat broadcasts in multiple languages using announcers skilled in specific languages, particularly for other than a few major languages. There are hundreds of languages and dialects that collectively represent a huge market, but are difficult to economically address.

The invention addresses these problems in several ways:
- It addresses the data-rate problem by changing the speech to text at the source, using a speech recognition system. The text is then transmitted from the originating location to secondary distribution locations nearer the recipient, which in one case can even be the recipient's receiving device, where the text is changed to speech using a text-to-speech program.
- It makes a broadcast in one language available in another.
- It makes it possible to broadcast a show or event in multiple languages without the cost of multi-lingual human broadcasters.
- It reduces the distribution problem of sending audio from a location where the originating language is spoken to a possibly remote location where another language is spoken.

Other systems have envisioned connecting multiple users to a source of text-to-speech synthesis. Matsumoto (US Patent 5,673,362) discusses a voice-synthesizing server that sends speech to clients over a Local Area Network (LAN). The server is designed to minimize the processing burden on a plurality of clients issuing requests and to provide speech in the form that can be accepted by the receiving devices, as opposed to solving the problem of having a single point of broadcast. The Matsumoto solution compounds the distribution problem by centralizing requests for information in one server for distribution to multiple clients, rather than distributing the load to multiple servers. Further, it does not address the problem of a mismatch in languages.

US patent 5,900,908 (Kirkland) describes using text "description data" which is created by humans to describe the visual scene for visually limited viewers, embedded in a TV signal, and then converted to speech using text-to-speech technology. The "description data" is spoken using text-to-speech "by definition, ...when the actors are not speaking." It is also distributed with the television signal, and not as an independent alternative to the standard broadcast.

There are three underlying technologies that are used in the invention: text-to-speech synthesis, speech recognition, and text-to-text translation. The following sections outline the existing technology that is used by those skilled in the art.

### Text-to-speech synthesis

There is well-established methodology and commercial software for converting text-to-speech (TTS) [e.g., Coker et al, US patent 3704345; Jonathan Allen, "Overview of Text-to-Speech Systems," in Advances in Speech Signal Processing, Sadaoki Furui, M. Mohan Sondhi (eds.), Marcel Dekker, Inc. (New York), 1992, pp. 741-790; or Sue Hertz, "The Technology of Text-to-Speech-an introduction," Speech Technology, CI Publishing, April/May 1997, pp. 18-21].

Most currently available systems use a dictionary and letter-to-sound rules for words not in the dictionary to generate a phonetic representation of the input text (a symbolic representation of how it sounds, e.g., representing "phone" as "F-OH-N"). Software then generates speech, using methods that simulate the way humans speak or by concatenating small segments of actual speech. The concatenative method usually assembles small pieces called diphones that are small parts of words, and can thus create any word for which it is given a phonetic spelling.

Some more recent techniques use a large database of speech to derive larger speech units than diphones for concatenative synthesis-when larger units matching the text are in the speech database [e.g., Andrew J. Hunt, Alan W. Black, "Unit Selection in a Concatenative Speech Synthesis System using a Large Speech Database," Transactions International Conference on Acoustics, Speech, and Signal Processing, Volume 1, Page 373, Institute of Electrical and Electronics Engineers, 1996.]. For example, if the database contained the spoken phrase, "It's a goal," the synthesis system could synthesize a sentence, "It's a goal, making the score five to one," using the full recorded phrase "It's a goal" as part of the sentence, and generating the rest of the sentence from smaller pieces of speech. This approach can generate speech that sounds very natural when the text is a good match to the database. This form of text-to-speech technology is very relevant to this invention, in that a typical broadcast distributed by the invention would be in a specific domain, such as sports, that could use a specialized text-to-speech system created from a sports speech database. The quality of the resulting speech would thus be close to human recorded speech. Text-to-speech software would be tailored to the broadcast content, using this form of technology, which is commercially available.

### Speech recognition

General large-vocabulary speech recognition is becoming widespread, and is sold commercially for dictation. In most applications envisioned, the announcer can train the system in advance to their voice, and can use a quality close-talking microphone, similar to that used on commercially available speech-to-text dictation software. This approach can work, with a trained announcer, for very general spoken content. It is particularly practical in that the resulting speech will be spoken with a text-to-speech synthesizer and listened to rather than viewed; as a result, errors that produce different text but that sound alike, e.g., "cite" versus "sight," would not be a perceptible error to the listener.

However, as noted, the invention will largely be used in known and limited contexts, such as broadcasting a tennis match, where the vocabulary and context is strongly limited. By using a recognition system tuned to the environment of the broadcast, the accuracy can be extremely high. Commercial toolkits sold by speech recognition technology vendors have tools for customizing vocabularies and creating grammars that can be used by those skilled in the art.

### Text-to-text translation

Automated translation of text material in one language to another, often referred to as "machine translation," is not fully solved [e.g., Trujillo, Arturo, Translation Engines: Techniques for Machine Translation, Springer Verlag, 1999]. Most general-purpose systems available today, although they continue to improve, are used for getting a rough translation. The situation is improved for more narrow contexts, and effective systems have been demonstrated for specific applications, such as conference registration and information [e.g., Woszczyna et al, "A modular approach to spoken language translation for large domains," Proceedings of AMTA 98]. Continuing improvement in the technology may make these general techniques useful in the present invention.

However, for certain limited broadcast contexts, as noted, the script may be available in advance or the context may be very limited. Those cases can be handled immediately by creating, in effect, a table-lookup matching a text sentence with a previously created text translation. Many applications of the current invention can be used in this manner.

Patent document US 5 696 879 A (CLINE TROY LEE ET AL) describes an example of a programmed computer system and computer-implemented method for efficiently transmitting voice in order to improve voice transmission via reduction in communication channel bandwidth.

### Summary of the Invention

The objectives of the present invention are solved by a system for distributing speech in a first language over a digital network as claimed in claim 1 and a method for distributing speech in a first language over a digital network as claimed in claim 21. Specific embodiments are claimed in the dependent claims.

### Brief Description of the Drawings

Figure 1 is a block diagram of a first example illustrating the invention.
Figure 2 is a block diagram of a second example illustrating the invention.
Figure 3 is a block diagram of a third example illustrating the invention.
Figure 4 is a block diagram of a fourth example illustrating the invention.

### Detailed Description of the Preferred Embodiment of the Invention

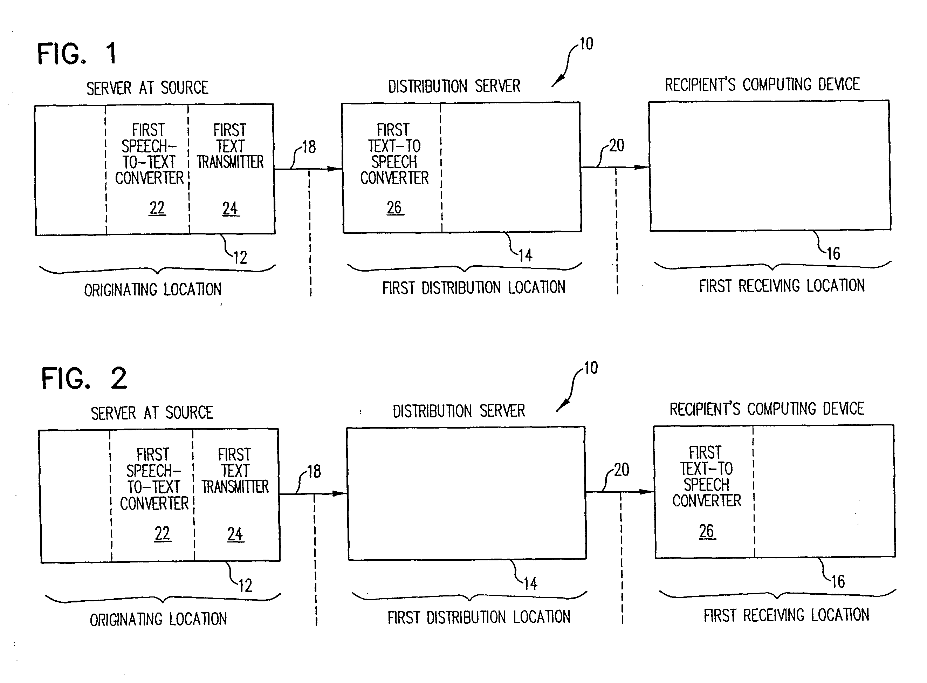

Figure 1 is a block diagram of a first example illustrating the invention. The system 10 includes an originating server 12, a distribution server 14, and a recipient's computing device 16. The computing device 16 can be a personal computer (PC), a handheld device, a set-top box, or other such similar device. The originating server 12, which is conventional, is connected to the distribution server 14 through a network 18. The network 18 can be wired or wireless. In one particularly relevant embodiment, the network 18 is a digital network that can be a local or a global computer network (such as the Internet).

The distribution server 14 is connected to the recipient's computing device 16 through a network 20. As is the case for the network 14, the network 20 can be wired or wireless, and in one particularly relevant embodiment, can also be a local or a global computer network (such as the Internet).

The originating server 12 is located at an originating location; the distribution server 14 is located at a first distribution location. The computing device 16 is located anywhere, but preferably in the vicinity of the first distribution location. In some applications, it is preferable that the computing device 16 be located closer to the first distribution location than the originating location.

The originating server 12 receives original speech that is supposed to be distributed from the originating location to the first distribution location. The original speech, which is spoken in a first language, is converted to text by a speech-to-text converter 22 known to those skilled in the relevant arts. The text is then transmitted by a first text transmitter 24 over the network 18 to the distribution server 14. In the first preferred embodiment, at the distribution server 14 the received text is converted by a first text-to-speech converter 26 to received speech in the first language. The first text-to-speech converter 26 is located at the distribution location. The operation of the first text-to-speech converter 26 can be based on speech synthesis or on mapping recorded sentences or other sounds as will be known by those skilled in the relevant arts. The speech produced by the first text-to-speech converter 26 is then transmitted to the computing device 16 over the network 20.

The computing device 16 preferably takes the form of a programmed PC, although other forms known to those skilled in the relevant arts could also be used. The computing device 16 receives the speech from the distribution server 14 over the network 20.

Figure 2 is a block diagram of a second example illustrating the invention. The reference numerals used in Figure 2 are the same as those used in Figure 1, indicating that the same components are used in the example shown in Figure 2 as are used in the example shown in Figure 1. In this second example, at the distribution server 14 the received text is transmitted over the network 20 to the computing device 16. The received text is then converted by a first text-to-speech converter 26 in the computing device 16 to received speech in the first language. The operation of the first text-to-speech converter 26 can be based on speech synthesis or on mapping recorded sentences or other sounds as will be known by those skilled in the relevant arts.

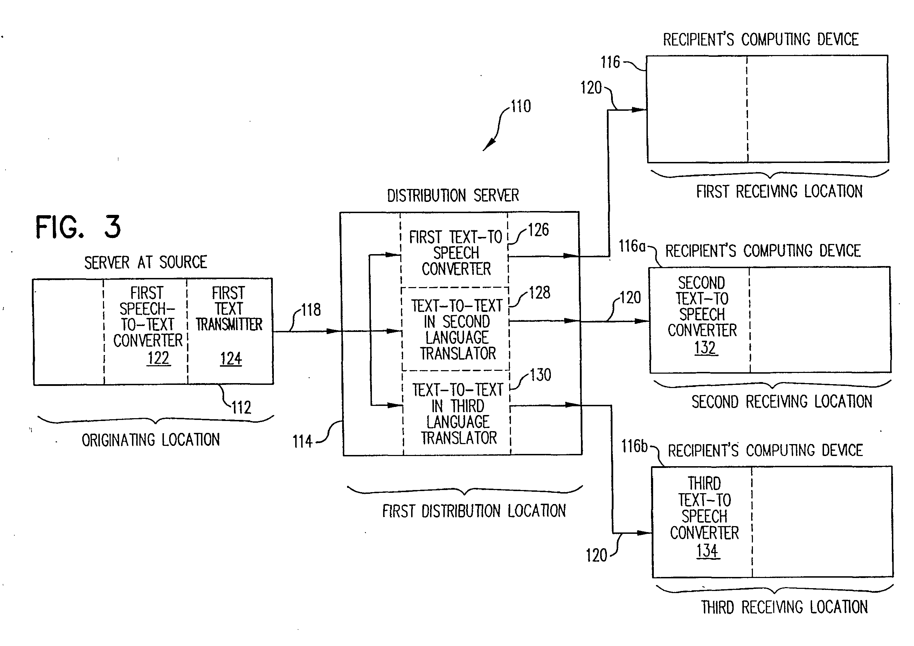

Figure 3 is a block diagram of a third example illustrating the invention. The system 110 includes an originating server 112, a distribution server 114, and two or more recipients' computing devices 116, 116a, 116b, and so forth (collectively referred to as computing devices 116). Each of the computing devices 116 can be a personal computer (PC), a handheld device, a set-top box, or other such similar device. The originating server 112, which is conventional, is connected to the distribution server 114 through a network 118. The network 118 can be wired or wireless. In one particularly relevant embodiment, the network 118 is a digital network that can be a local or a global computer network (such as the Internet).

The distribution server 114 is connected to the recipients' computing devices 116 through a network 120. As is the case for the network 114, the network 120 can be wired or wireless, and in one particularly relevant embodiment, can also be a local or a global computer network (such as the Internet).

The originating server 112 is located at an originating location; the distribution server 114 is located at a first distribution location. The computing devices 116 are located anywhere, but preferably in the vicinities of first, second, and third distribution locations, and so forth. In some applications, it is preferable that the computing devices 116 be located closer to the first distribution location than the originating location.

The originating server 112 receives original speech that is supposed to be distributed from the originating location to the first, second, third distribution locations. The original speech, which expresses ideas in a first language, is converted to text by a speech-to-text converter 122 known to those skilled in the relevant arts. The text is then transmitted by a first text transmitter 124 over the network 118 to the distribution server 114. At the distribution server 114 the received text is converted by a first text-to-speech converter 126 to received speech in the first language. The first text-to-speech converter 126 is located at the first distribution location. The operation of the first text-to-speech converter 126 can be based on speech synthesis or on mapping recorded sentences or other sounds as will be known by those skilled in the relevant arts. The speech produced by the first text-to-speech converter is then transmitted to the computing device 116 over the network 120.

At the distribution server 114 the received text in the first language is also converted by a translator 128. The translator 128 translates text in the first language to text in the second language. The text in the second language is sent, via network 120, to the computing device 116a at the second receiving location. The computing device 116a includes a second text-to-speech converter 132. As with the first text-to-speech converter 126, the second text-to-speech converter 132 can be based on speech synthesis or on mapping recorded sentences or other sounds as will be known by those skilled in the relevant arts. The speech produced by the second text-to-speech converter is then processed by the computing device 116a.

Also, if desired, at the distribution server 114 the received text in the first language is also converted by another translator 128 to text in a third language. The text in the third language is sent, via network 120, to the computing device 116b at the third receiving location. The computing device 116b includes a third text-to-speech converter 134. As with the first text-to-speech converter 126, the third text-to-speech converter 132 can be based on speech synthesis or on mapping recorded sentences or other sounds as will be known by those skilled in the relevant arts. The speech produced by the third text-to-speech converter is then processed by the computing device 116b.

The computing devices 116 preferably take the form of a programmed PC, although other forms known to those skilled in the relevant arts could also be used. The computing devices 116 receives the speech from the distribution server 114 over the network 120.

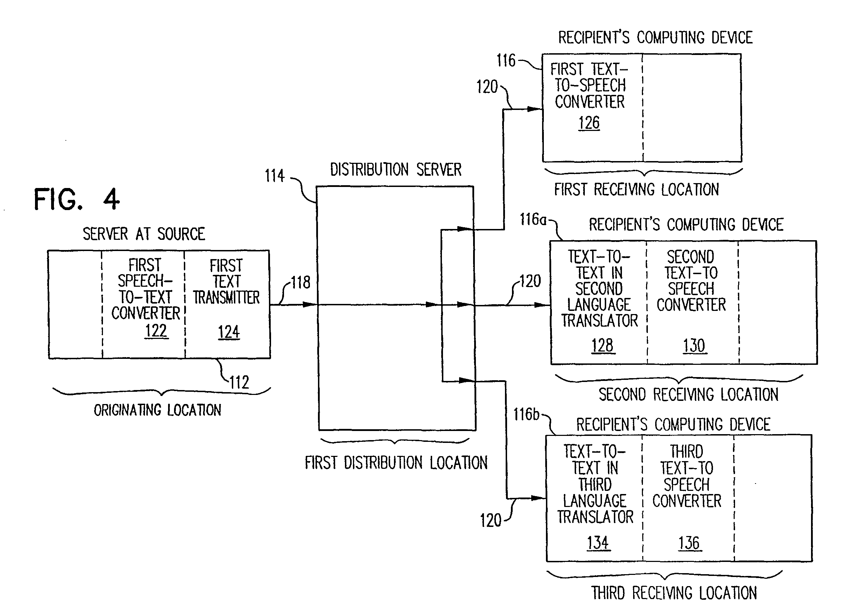

Figure 4 is a block diagram of a fourth example illustrating the invention. The reference numerals used in Figure 4 are the same as those used in Figure 3, indicating that the same components are used in the example shown in Figure 4 as are used in the example shown in Figure 3. In this fourth example, the received text is transmitted from the distribution server 114 over the network 120 to the computing devices 116, 116a, and (if desired) 116b. The received text is then converted by a first text-to-speech converter 126 in the computing device 116 to received speech in the first language. The operation of the first text-to-speech converter can be based on speech synthesis or on mapping recorded sentences or other sounds as will be known by those skilled in the relevant arts.

The received text is also converted by translator 128 in the computing device 116a to text in the second language. The translator 128 translates text in the first language to text in the second language translator. The text in the second language is then converted to speech in the second language in the second text-to-speech converter 130. The second text-to-speech converter 130 can be based on speech synthesis or on mapping recorded sentences or other sounds as will be known by those skilled in the relevant arts.

Also, if desired, the received text is also converted by a text in the first language-to-text in a third language translator 134 in the computing device 116b to text in the third language. The text in the third language is then converted to speech in the third language in a third text-to-speech converter 136. The third text-to-speech converter 136 can be based on speech synthesis or on mapping recorded sentences or other sounds as will be known by those skilled in the relevant arts.

In many applications, speech is synchronized with video information. A familiar example is speech that accompanies a sequence of video scenes. The speech can be sent by the above-described preferred embodiments of the present invention. After the speech has been retranslated to the first language or translated to a second language, it can then be resynchronized with the video information, which has also been transmitted to the recipient's computing device. One need for resynchronization is to account for the delay imposed by the speech-to-text and text-to speech conversions as well as the text-to-text translation.

While the foregoing is a detailed description of the preferred embodiment of the invention, there are many alternative embodiments of the invention that would,occur to those skilled in the relevant arts and which are within the scope of the present invention. Accordingly, the present invention is to be determined by the following claims.

## Claims

1. A system (10, 110) for distributing speech in a first language over a digital network (18, 118) from an originating location (12, 112) to a first distribution location (14, 114), the speech at the originating location (12, 112) being originating speech that is either live or pre-recorded, and the speech at the first distribution location (14, 114) being received speech, the system (10,110) comprising:
means (22, 122) for converting the originating speech to text in the first language at the originating location (12, 112);
means (24, 124) for transmitting the text to the first distribution location (14, 114) over the digital network (18, 118); and
means (26, 126) for converting the text to received speech in the first language at the first distribution location (14, 114),
**characterized by**
means (128, 134) for translating the text in the first language into text in a second language that is different from the first language; and
means (130, 136) for converting the text in the second language to received speech in the second language.

2. The system (10, 110) of claim 1, further comprising:
means (20, 120) for distributing the received speech in the first language to one or more first recipients (16, 116) in a plurality of recipients (16, 116, 116a, 116b).

3. The system (10, 110) of claim 2, wherein at the first distribution location (14, 114) the received text is only transmitted over a network (20, 120) to the one or more of the first recipients (16, 116) and wherein the transmitted text is converted at the first recipients (16, 116) to received speech in the first language.

4. The system (10, 110) of claim 1 or 2, wherein the means (130, 136) for converting the text in the second language to received speech in the second language are provided at the first distribution location (14, 114).

5. The system (10, 110) of claim 4, further comprising:
means (20, 120) for distributing the received speech in the second language to one or more second recipients (116a, 116b) in the plurality of recipients (16, 116, 116a, 116b), the one or more second recipients (116a, 116b) being different from the one or more first recipients (16, 116).

6. The system (10, 110) of claim 1 or 2, wherein the means (128, 134) for converting the originating speech to text in a second language are provided at the originating location (12, 112); and the system (10,110) further comprising:
means for transmitting the text in the second language to a second distribution location over a digital network (18, 118); and
means for converting the text in the second language to received speech in the second language at the second distribution location.

7. The system (10, 110) of claim 2, wherein the distributing means (14, 114) comprises
means (128, 134) for translating the text in the first language to text in a second language that is different from the first language,
wherein means (20, 120) are provided for distributing the text in the second language to one or more second recipients (116a, 116b) in the plurality of recipients (16, 116, 116a, 116b), the one or more second recipients (116a, 116b) being different from the one or more first recipients (16, 116), and wherein the means (130, 136) for converting the text to received speech in the second language are provided at the second recipients (116a, 116b).

8. The system (10, 110) of claim 7, wherein the means (128, 134) for translating the text in the first language to text in the second language that is different from the first language are provided in the one or more of the second recipients (116a, 116b), and wherein the translating means (128, 134) are connected with the means (130, 136) for converting the text to received speech in the second language.

9. The system (10, 110) of one of claims 2 to 8, wherein each of the one or more first and second recipients (16, 116, 116a, 116b) is located in the vicinity of a receiving location taken from a plurality of first and second receiving locations, each of the second receiving locations being different from the first receiving locations.

10. The system (10, 110) of claim 9, wherein each of the first and second receiving locations is nearer to the first or second distribution location (14, 114) than to the originating location (12, 112).

11. The system (10, 110) of one of claims 9 to 10, wherein the means (128, 134) for translating the text in the first language into text in a second language that is different from the first language are provided in the transmitting means (24, 124) and the means (130, 136) for converting the text in the second language to received speech in the second language are provided at the first distribution location (14, 114).

12. The system (10, 110) of one of claims 1 to 11, further comprising:
a second speech-to-text converter to convert the originating speech to text in a second language, the second speech-to-text converter being located at the originating location (12, 112);
a second text transmitter to transmit the text in the second language to a second distribution location over the digital network (18, 118); and
a second text-to-speech converter to convert the text in the second language to received speech in the second language, the second text-to-speech converter being located at the second distribution location.

13. The system (10, 110) of one of claims 1 to 12, wherein the means (22, 122) for converting the originating speech to text include a speech-to-text converter.

14. The system (10, 110) of one of claims 1 to 13, wherein the means (26, 126) for converting the text to received speech include text-to-speech converters.

15. The system (10, 110) of one of claims 1 to 14, wherein the originating speech is a prerecorded audio signal.

16. The system (10, 110) of claim 14 or 15, wherein the text-to-speech converter includes a programmed PC.

17. The system (10, 110) of one of claims 1 to 16, wherein the originating speech is synchronized with video information, and further comprising:
means for transmitting the video information to the first distribution location over the digital network (18, 118);
means being located at the distribution location for receiving the video information transmitted by the video transmitter; and
means for synchronizing the received speech with the received video information.

18. The system (10, 110) of claim 17, wherein the transmitting means includes a video transmitter.

19. The system (10, 110) of claims 17 or 18, wherein the receiving means includes a video information receiver.

20. The system (10, 110) of one of claims 17 to 19, wherein the synchronizing means includes a speech-video synchronizer.

21. A method for distributing speech in a first language over a digital network (18, 118) from an originating location (12, 112) to a first distribution location (14, 114), the speech at the originating location (12, 112) being originating speech that is either live or pre-recorded, and the speech at the first distribution location (14,114) being received speech, comprising the steps of:
a) converting the originating speech to text in the first language at the originating location (12, 112);
b) transmitting the text to the first distribution location (14, 114) over the digital network (18, 118); and
c) converting the text to received speech in the first language at the first distribution location (14, 114),
**characterized by**
b1) translating the text in the first language into text in a second language that is different from the first language.

22. The method of claim 21, further comprising the step of:
d) distributing the received speech in the first language to one or more first recipients (16, 116) in a plurality of recipients (16, 116, 116a, 116b).

23. The method of claim 22, wherein the one or more first recipients (16, 116) are located in the vicinity of a first receiving location.

24. The method of claim 23, wherein the first receiving location is nearer to the first distribution location (14, 114) than to the originating location (12, 112).

25. The method of one of claims 21 to 23, wherein step b) comprises step b1).

26. The method of claim 25, further comprising the step of:
e) converting the text in the second language to received speech in the second language at the first distribution location (14, 114).

27. The method of claim 26, further comprising the step of:
f) distributing the received speech in the second language to one or more second recipients (116a, 116b) in the plurality of recipients (16, 116, 116a, 116b), the one or more second recipients (116a, 116b) being different from the one or more first recipients (116a, 116b).

28. The method of claim 27, wherein each of the one or more second recipients (116a, 116b) is located in the vicinity of a receiving location taken from a plurality of second receiving locations, each of the receiving location being different from the first receiving location.

29. The method of claim 27 or 28, wherein each of the second receiving locations is nearer to the first distribution location (14, 114) than to the originating location (12, 112).

30. The method of one of claims 21 to 29, wherein the originating speech is a prerecorded audio signal.

31. The method of one of claims 21 to 30, wherein step c) is performed by a programmed PC.

32. The method of one of claim 21 to 31, further comprising the steps of:
g) converting the originating speech to text in a second language at the originating location (12, 112);
h) transmitting the text in the second language to a second distribution location over the digital network (18, 118); and
i) converting the text in the second language to received speech in the second language at the second distribution location.

33. The method of one of claims 21 to 32, wherein the originating speech is synchronized with video information, the method further comprising the steps of:
j) transmitting the video information to the first distribution location over the digital network;
k) receiving the video information transmitted by the video transmitter at the distribution location (14, 114); and
l) synchronizing the received speech with the received video information.

## Patentansprüche

1. System (10, 110) zum Verteilen von Sprechakten in einer ersten Sprache über ein digitales Netzwerk (18, 118) von einem Ausgangsort (12, 112) zu einem ersten Verteilungsort (14, 114), wobei der Sprechakt am Ausgangsort (12, 112) ein Ausgangssprechakt ist, der entweder live oder voraufgezeichnet ist, und der Sprechakt am ersten Verteilungsort (14, 114) ein empfangener Sprechakt ist, wobei das System (10, 110) Folgendes umfasst:
Mittel (22, 122) zum Konvertieren des Ausgangssprechaktes in Text in der ersten Sprache am Ausgangsort (12, 112);
Mittel (24, 124) zum Senden des Textes über das digitale Netzwerk (18, 118) an den ersten Verteilungsort (14, 114); und
Mittel (26, 126) zum Konvertieren des Textes in einen empfangenen Sprechakt in der ersten Sprache am ersten Verteilungsort (14, 114),
**gekennzeichnet durch**
Mittel (128, 134) zum Übersetzen des Textes in der ersten Sprache in Text in einer zweiten Sprache, die sich von der ersten Sprache unterscheidet; und
Mittel (130, 136) zum Konvertieren des Textes in der zweiten Sprache in empfangenen Text in der zweiten Sprache.

2. System (10, 110) gemäß Anspruch 1, ferner umfassend:
Mittel (20, 120) zum Verteilen des empfangenen Sprechakts in der ersten Sprache an einen oder mehrere Empfänger (16, 116) in einer Mehrzahl von Empfängern (16, 116, 116a, 116b).

3. System (10, 110) gemäß Anspruch 2, wobei der empfangene Text am ersten Verteilungsort (14, 114) nur über ein Netzwerk (20, 120) an den einen oder die mehreren der ersten Empfänger (16, 116) gesendet wird und wobei der gesendete Text bei den ersten Empfängern (16, 116) in einen empfangenen Sprechakt in der ersten Sprache konvertiert wird.

4. System (10, 110) gemäß Anspruch 1 oder 2, wobei die Mittel (130, 136) zum Konvertieren des Textes in der zweiten Sprache in einen empfangenen Sprechakt in der zweiten Sprache am ersten Verteilungsort (14, 114) bereitgestellt sind.

5. System (10, 110) gemäß Anspruch 4, ferner umfassend:
Mittel (20, 120) zum Verteilen des empfangenen Sprechaktes in der zweiten Sprache an einen oder mehrere zweite Empfänger (116a, 116b) in der Mehrzahl von Empfängern (16, 116, 116a, 116b), wobei der eine oder die mehreren zweiten Empfänger (116a, 116b) sich von dem einen oder den mehreren ersten Empfängern (16, 116) unterscheiden.

6. System (10, 110) gemäß Anspruch 1 oder 2, wobei die Mittel (128, 134) zum Konvertieren des Ausgangssprechaktes in Text in einer zweiten Sprache am Ausgangsort (12, 112) bereitgestellt sind, und wobei das System (10, 110) ferner Folgendes umfasst:
Mittel zum Senden des Textes in der zweiten Sprache über ein digitales Netzwerk (18, 118) an einen zweiten Verteilungsort; und
Mittel zum Konvertieren des Textes in der zweiten Sprache in einen empfangenen Sprechakt in der zweiten Sprache am zweiten Verteilungsort.

7. System (10, 110) gemäß Anspruch 2, wobei die Verteilungsmittel (14, 114) umfassen:
Mittel (128, 134) zum Übersetzen des Textes in der ersten Sprache in Text in einer zweiten Sprache, die sich von der ersten Sprache unterscheidet,
wobei Mittel (20, 120) zum Verteilen des Textes in der zweiten Sprache an einen oder mehrere zweite Empfänger (116a, 116b) in der Mehrzahl von Empfängern (16, 116, 116a, 116b) bereitgestellt sind, wobei der eine oder die mehreren zweiten Empfänger (116a, 116b) sich von dem einen oder den mehreren ersten Empfängern (16, 116) unterscheiden, und wobei die Mittel (130, 136) zum Konvertieren des Textes in einen empfangenen Sprechakt in der zweiten Sprache bei den zweiten Empfängern (116a, 116b) bereitgestellt sind.

8. System (10, 110) gemäß Anspruch 7, wobei die Mittel (128, 134) zum Übersetzen des Textes in der ersten Sprache in Text in der zweiten Sprache, die sich von der ersten Sprache unterscheidet, in dem einen oder den mehreren der zweiten Empfänger (116a, 116b) bereitgestellt sind, und wobei die Übersetzungsmittel (128, 134) mit den Mitteln (130, 136) zum Konvertieren des Textes in einen empfangenen Sprechakt in der zweiten Sprache verbunden sind.

9. System (10, 110) gemäß einem der Ansprüche 2 bis 8, wobei jeder des einen oder der mehreren ersten und zweiten Empfänger (16, 116, 116a, 116b) in der Nähe eines Empfangsortes angeordnet ist, der aus einer Mehrzahl erster und zweiter Empfangsorte genommen wird, wobei jeder der zweiten Empfangsorte sich von den ersten Empfangsorten unterscheidet.

10. System (10, 110) gemäß Anspruch 9, wobei jeder der ersten und zweiten Empfangsorte näher am ersten oder zweiten Verteilungsort (14, 114) ist als am Ausgangsort (12, 112).

11. System (10, 110) gemäß einem der Ansprüche 9 bis 10, wobei die Mittel (128, 134) zum Übersetzen des Textes in der ersten Sprache in Text in einer zweiten Sprache, die sich von der ersten Sprache unterscheidet, in den Sendemitteln (24, 124) vorgesehen sind und die Mittel (130, 136) zum Konvertieren des Textes in der zweiten Sprache in einen empfangenen Sprechakt in der zweiten Sprache am ersten Verteilungsort (14, 114) bereitgestellt sind.

12. System (10, 110) gemäß einem der Ansprüche 1-11, das ferner Folgendes umfasst:
einen zweiten Sprechakt-in-Text-Konverter zum Konvertieren des Ausgangssprechakts in Text in einer zweiten Sprache, wobei der zweite Sprechakt-in-Text-Konverter am Ausgangsort (12, 112) angeordnet ist;
ein zweiten Textsender zum Senden des Textes in der zweiten Sprache über das digitale Netzwerk (18, 118) an einen zweiten Verteilungsort; und
einen zweiten Text-in-Sprechakt-Konverter zum Konvertieren des Textes in der zweiten Sprache in einen empfangenen Sprechakt in der zweiten Sprache, wobei der zweiten Text-in-Sprechakt-Konverter am zweiten Verteilungsort angeordnet ist.

13. System (10, 110) gemäß einem der Ansprüche 1-12, wobei die Mittel (22, 122) zum Konvertieren des Ausgangssprechakts in Text einen Sprechakt-in-Text-Konverter umfassen.

14. System (10, 110) gemäß einem der Ansprüche 1-13, wobei die Mittel (26, 126) zum Konvertieren des Textes in einen empfangenen Sprechakt Text-in-Sprechakt-Konverter umfassen.

15. System (10, 110) gemäß einem der Ansprüche 1-14, wobei der Ausgangssprechakt ein vorher aufgezeichnetes Audiosignal ist.

16. System (10, 110) gemäß einem der Ansprüche 14 oder 15, wobei der Text-in-Sprechakt-Konverter einen programmierten PC umfasst.

17. System (10, 110) gemäß einem der Ansprüche 1-16, wobei der Ausgangssprechakt mit Videoinformationen synchronisiert ist und das System ferner Folgendes umfasst:
Mittel zum Senden der Videoinformationen über das digitale Netzwerk (18, 118) an den ersten Verteilungsort;
Mittel, die am Verteilungsort zum Empfangen der vom Videosender gesendeten Videoinformationen angeordnet sind; und
Mittel zum Synchronisieren des empfangenen Sprechakts mit den empfangenen Videoinformationen.

18. System (10, 110) gemäß Anspruch 17, wobei die Sendemittel einen Videosender umfassen.

19. System (10, 110) gemäß einem der Ansprüche 17 oder 18, wobei die Empfangsmittel einen Videoinformationsempfänger umfassen.

20. System (10, 110) gemäß einem der Ansprüche 17-19, wobei die Synchronisierungsmittel einen Sprechakt-Video-Synchronisator umfassen.

21. Verfahren zum Verteilen von Sprechakten in einer ersten Sprache über ein digitales Netzwerk (18, 118) von einem Ausgangsort (12, 112) an einen ersten Verteilungsort (14, 114), wobei der Sprechakt am Ausgangsort (12, 112) ein Ausgangssprechakt ist, der entweder live oder voraufgezeichnet ist, und der Sprechakt am ersten Verteilungsort (14, 114) ein empfangener Sprechakt ist, wobei das Verfahren aus folgenden Schritten besteht:
a) Konvertieren des Ausgangssprechakts in Text in der ersten Sprache am Ausgangsort (12, 112);
b) Senden des Textes über das digitale Netzwerk (18, 118) an den ersten Verteilungsort (14, 114); und
c) Konvertieren des Textes in einen empfangenen Sprechakt in der ersten Sprache am ersten Verteilungsort (14, 114),
**gekennzeichnet durch**
b1) die Übersetzung des Textes in der ersten Sprache in Text in einer zweiten Sprache, die sich von der ersten Sprache unterscheidet.

22. Verfahren gemäß Anspruch 21, das ferner folgenden Schritt umfasst:
d) Verteilen des empfangenen Sprechakts in der ersten Sprache an einen oder mehrere erste Empfänger (16, 116) in einer Mehrzahl von Empfängern (16, 116, 116a, 116b).

23. Verfahren gemäß Anspruch 22, wobei der eine oder die mehreren Empfänger (16, 116) in der Nähe eines ersten Empfangsortes angeordnet sind.

24. Verfahren gemäß Anspruch 23, wobei der erste Empfangsort näher am ersten Verteilungsort (14, 114) angeordnet ist als am Ausgangsort (12, 112).

25. Verfahren gemäß einem der Ansprüche 21-23, wobei der Schritt b) den Schritt b1) umfasst.

26. Verfahren gemäß Anspruch 25, das ferner folgenden Schritt umfasst:
e) Konvertieren des Textes in der zweiten Sprache in einen empfangenen Sprechakt in der zweiten Sprache am ersten Verteilungsort (14, 114).

27. Verfahren gemäß Anspruch 26, das ferner folgenden Schritt umfasst:
f) Verteilen des empfangenen Sprechakts in der zweiten Sprache an einen oder mehrere zweite Empfänger (116a, 116b) in der Mehrzahl von Empfängern (16, 116, 116a, 116b), wobei der eine oder die mehreren zweiten Empfänger (116a, 116b) sich von dem einen oder den mehreren ersten Empfängern (116a, 116b) unterscheiden.

28. Verfahren gemäß Anspruch 27, wobei jeder des einen oder der mehreren zweiten Empfänger (116a, 116b) in der Nähe eines aus einer Mehrzahl von zweiten Empfangsorten genommenen Empfangsortes angeordnet ist, wobei jeder der Empfangsorte sich vom ersten Empfangsort unterscheidet.

29. Verfahren gemäß Anspruch 27 oder 28, wobei jeder der zweiten Empfangsorte näher am ersten Verteilungsort (14, 114) angeordnet ist als am Ausgangsort (12, 112).

30. Verfahren gemäß einem der Ansprüche 21 bis 29, wobei der Ausgangssprechakt ein voraufgezeichnetes Audiosignal ist.

31. Verfahren gemäß einem der Ansprüche 21 bis 30, wobei der Schritt c) von einem programmierten PC durchgeführt wird.

32. Verfahren gemäß einem der Ansprüche 21 bis 31, das ferner folgende Schritte umfasst:
g) Konvertieren des Ausgangssprechaktes in Text in einer zweiten Sprache am Ausgangsort (12, 112);
h) Senden des Textes in der zweiten Sprache über ein digitales Netzwerk (18, 118) an einen zweiten Verteilungsort; und
i) Konvertieren des Textes in der zweiten Sprache in einen empfangenen Sprechakt in der zweiten Sprache am zweiten Verteilungsort.

33. Verfahren gemäß einem der Ansprüche 21 bis 32, wobei der Ausgangssprechakt mit Videoinformationen synchronisiert ist und das Verfahren ferner folgende Schritte umfasst:
j) Senden der Videoinformationen über das digitale Netzwerk an den ersten Verteilungsort;
k) Empfangen der vom Videosender gesendeten Videoinformationen am Verteilungsort (14, 114); und
l) Synchronisieren des empfangenen Sprechakts mit den empfangenen Videoinformationen.

## Revendications

1. Système (10, 110) permettant la diffusion de paroles dans une première langue sur un réseau numérique (18, 118) d'un lieu d'origine (12, 112) à un premier lieu de diffusion (14, 114), les paroles au niveau du lieu d'origine (12, 112) étant des paroles en direct ou enregistrées, et les paroles au niveau du premier lieu de diffusion (14, 114) étant des paroles reçues, ce système (10, 110) comprenant :
des moyens (22, 122) permettant de transformer les paroles d'origine en un texte dans la première langue au niveau du lieu d'origine (12, 112),
des moyens (24, 124) permettant de transmettre le texte au premier lieu de diffusion (14, 114) sur le réseau numérique (18, 118), et
des moyens (26, 126) permettant de transformer le texte en les paroles reçues dans la première langue au niveau du premier lieu de diffusion (14, 114),
**caractérisé par**
des moyens (128, 134) permettant de traduire le texte dans la première langue en un texte dans une seconde langue qui est différente de la première langue, et
des moyens (130, 136) permettant de transformer le texte dans la seconde langue en les paroles reçues dans la seconde langue.

2. Système (10, 110) conforme à la revendication 1, comprenant en outre
des moyens (20, 120) permettant de diffuser les paroles reçues dans la première langue sur un ou plusieurs premiers récepteurs (16, 116) parmi un ensemble de récepteurs (16, 116, 116a, 116b).

3. Système (10, 110) conforme à la revendication 2, dans lequel au niveau du premier lieu de diffusion (14, 114) le texte reçu est seulement transmis sur un réseau (20, 120) au premier récepteur (16, 116), et le texte transmis est transformé au niveau du premier récepteur (16, 116) en des paroles reçues dans la première langue.

4. Système (10, 110) conforme à la revendication 1 ou 2, dans lequel les moyens (130, 136) permettant de transformer le texte dans la seconde langue en des paroles reçues dans la seconde langue sont prévus au niveau du premier lieu de diffusion (14, 114).

5. Système (10, 110) conforme à la revendication 4, comprenant en outre
des moyens (20, 120) permettant de diffuser les paroles reçues dans la seconde langue sur un ou plusieurs seconds récepteurs (116a, 116b) parmi un ensemble de récepteurs (16, 116, 116a, 116b), le ou les second(s) récepteur(s) (116a, 116b) étant différent(s) du ou des premier(s) récepteur(s) (16, 116).

6. Système (10, 110) conforme à la revendication 1 ou 2, dans lequel les moyens (128, 134) permettant de transformer les paroles de départ en un texte dans la seconde langue sont prévus au niveau du lieu d'origine (12, 112), et le système (10, 110) comprend en outre :
des moyens permettant de transmettre le texte dans la seconde langue à un second lieu de diffusion sur un réseau numérique (18, 118),
des moyens permettant de transformer le texte dans la seconde langue en les paroles reçues dans la seconde langue au niveau du second lieu de diffusion.

7. Système (10, 110) conforme à la revendication 2, dans lequel les moyens de diffusion (14, 114) comprennent :
des moyens (128, 134) permettant de traduire le texte dans la première langue en un texte dans une seconde langue qui est différente de la première langue,
des moyens (20, 120) étant prévus pour permettre de diffuser le texte dans la seconde langue sur un ou plusieurs premiers récepteur(s) (116a, 116b) parmi l'ensemble de récepteurs (16, 116, 116a, 116b), le ou les second(s) récepteur(s) (116a, 116b) étant différents du ou des premier(s) récepteur(s) (16, 116), et les moyens (130, 136) permettant de transformer le texte en les paroles reçues dans la seconde langue sont prévus au niveau des seconds récepteurs (116a, 116b).

8. Système (10, 110) conforme à la revendication 7, dans lequel les moyens (128, 134) permettant de traduire le texte dans la première langue en un texte dans la seconde langue qui est différente de la première langue sont prévus dans le ou les second(s) récepteur(s) (116a, 116b), et les moyens de traduction (128, 134) sont reliés au moyens (130, 136) permettant de transformer le texte en les paroles reçues dans la second langue.

9. Système (10, 110) conforme à l'une des revendications 2 à 8, dans lequel le ou chacun des premiers et seconds récepteurs (16, 116, 116a, 116b) est situé au voisinage d'un lieu de réception pris parmi un ensemble de premiers et de seconds lieux de réception, chacun des seconds lieux de réception étant différents des premiers lieux de réception.

10. Système (10, 110) conforme à la revendication 9, dans lequel chacun des premiers et des seconds lieux de réception est plus proche du premier ou second lieu de diffusion (14, 114) que du lieu d'origine (12, 112).

11. Système (10, 110) conforme à l'une des revendications 9 à 10, dans lequel les moyens (128, 134) permettant de traduire le texte dans la première langue en un texte dans la seconde langue qui est différente de la première langue sont prévus dans les moyens de transmission (24, 124) et les moyens (130, 136) permettant de transformer le texte dans la seconde langue en les paroles reçues dans la seconde langue sont prévus au niveau du premier lieu de diffusion (14, 114).

12. Système (10, 110) conforme à l'une des revendications 1 à 11, comprenant en outre :
un second convertisseur paroles/texte permettant de transformer les paroles d'origine en un texte dans la seconde langue, le second convertisseur paroles/texte étant situé au niveau du lieu d'origine (12, 112), un second élément de transmission de texte permettant de transmettre le texte dans la seconde langue à un second lieu de diffusion sur le réseau numérique (18, 118),
et un second convertisseur texte/paroles permettant de transformer le texte dans la seconde langue en les paroles reçues dans la seconde langue, le second convertisseur texte/paroles étant situé au niveau du second lieu de diffusion.

13. Système (10, 110) conforme à l'une des revendications 1 à 12, dans lequel les moyens (22, 122) permettant de transformer les paroles d'origine en un texte comportent un convertisseur paroles/texte.

14. Système (10, 110) conforme à l'une des revendications 1 à 13, dans lequel les moyens (26, 126) permettant de transformer le texte en les paroles reçues comprend un convertisseur texte/paroles.

15. Système (10, 110) conforme à l'une des revendications 1 à 14, dans lequel les paroles d'origine sont un signal audio préenregistré.

16. Système (10, 110) conforme à la revendication 14 ou 15, dans lequel le convertisseur texte/paroles comporte un PC programmé.

17. Système (10, 110) conforme à l'une des revendications 1 à 16, dans lequel les paroles d'origine sont synchronisées avec une information vidéo, comprenant en outre :
des moyens permettant de transmettre l'information vidéo au premier lieu de diffusion sur le réseau numérique (18, 118),
des moyens situés au niveau du lieu de diffusion pour la réception de l'information vidéo transmise par les organes de transmission vidéo, et
des moyens permettant de synchroniser les paroles reçues avec l'information vidéo reçue.

18. Système (10, 110) conforme à la revendication 17, dans lequel les moyens de transmission comportent un élément de transmission vidéo.

19. Système (10, 110) conforme à la revendication 17 ou 18, dans lequel les moyens de réception comportent un récepteur d'information vidéo.

20. Système (10, 110) conforme à l'une des revendications 17 à 19, dans lequel les moyens de synchronisation comportent un synchroniseur paroles/vidéo.

21. Procédé permettant de diffuser des paroles dans une première langue sur un réseau numérique (18, 118) d'un lieu d'origine (12, 112) à un premier lieu de diffusion (14, 114), les paroles au niveau du lieu d'origine (12, 112) étant des paroles pouvant être soit en direct soit préenregistrées, et les paroles au niveau du premier lieu de diffusion (14, 114) étant des paroles reçues, comprenant les étapes consistant à :
a) transformer les paroles d'origine en un texte dans la première langue au niveau du lieu d'origine (12, 112),
b) transmettre le texte au premier lieu de diffusion (14, 114) sur le réseau numérique (18, 118), et
c) transformer le texte en les paroles reçues dans la première langue au niveau du premier lieu de diffusion (14, 114)
**caractérisé par**
une étape consistant à
b1) traduire le texte dans la première langue en le texte dans une seconde langue qui est différente de la première langue.

22. Procédé conforme à la revendication 21, comprenant en outre l'étape consistant à :
d) diffuser les paroles reçues dans la première langue à un ou plusieurs premier(s) récepteur(s) (16, 116) parmi un ensemble de récepteurs (16, 116, 116a, 116b).

23. Procédé conforme à la revendication 22, selon lequel le ou les premier(s) récepteur(s) (16, 116) est(sont) situé(s) au voisinage du premier lieu de réception.

24. Procédé conforme à la revendication 23, selon lequel le premier lieu de réception est plus proche du premier lieu de diffusion (14, 114) que du lieu d'origine (12, 112).

25. Procédé conforme à l'une des revendications 21 à 23, selon lequel l'étape b) comprend l'étape b1).

26. Procédé conforme à la revendication 25, comprenant en outre l'étape consistant à :
e) transformer le texte dans la première langue en les paroles reçues dans la seconde langue au niveau du premier lieu de diffusion (14, 114).

27. Procédé conforme à la revendication 26, comprenant en outre l'étape consistant à :
f) diffuser les paroles reçues dans la seconde langue à un ou plusieurs second(s) récepteur(s) (116a, 116b) parmi l'ensemble de récepteur(s) (16, 116, 116a, 116b), le ou les second(s) récepteur(s) (116a, 116b) étant différents du ou des premier(s) récepteur(s) (116a, 116b).

28. Procédé conforme à la revendication 27, selon lequel le ou chacun des second(s) récepteur(s) (116a, 116b) est situé au voisinage d'un lieu de réception pris parmi un ensemble de seconds lieux de réception, chacun des seconds lieux de réception étant différents du premier lieu de réception.

29. Procédé conforme à la revendication 27 ou 28, selon lequel chacun des seconds lieux de réception est plus proche du premier lieu de diffusion (14, 114) que du lieu d'origine (12, 112).

30. Procédé conforme à l'une des revendications 21 à 29, selon lequel les paroles d'origine sont un signal audio préenregistré.

31. Procédé conforme à l'une des revendications 21 à 30, selon lequel l'étape c) est mise en oeuvre par un PC préprogrammé.

32. Procédé conforme à l'une des revendications 21 à 31, comprenant en outre des étapes consistant à :
g) transformer les paroles d'origine en un texte dans la seconde langue au niveau du lieu d'origine (12, 12),
h) transmettre le texte dans la seconde langue à un second lieu de diffusion sur le réseau numérique (18, 118), et
i) transformer le texte dans la seconde langue en les paroles reçues dans la seconde langue au niveau du second lieu de diffusion.

33. Procédé conforme à l'une des revendications 21 à 32, selon lequel les paroles d'origine sont synchronisées avec une information vidéo, le procédé comprenant en outre les étapes consistant à :
j) transmettre l'information vidéo au premier lieu de diffusion sur le réseau numérique,
k) recevoir l'information vidéo transmise par l'élément de transmission vidéo au niveau du lieu de diffusion (14, 114), et 1) synchroniser les paroles reçues avec l'information vidéo reçue.
